# EUROPEAN PATENT SPECIFICATION

(11) **EP 2 072 573 B1**
(45) Date of publication and mention of the grant of the patent: **09.03.2011**
(21) Application number: 07025037.8
(22) Date of filing: 21.12.2007
(51) Int. Cl.: C08K 9/04, H01B 3/44

(54) **Flame retardant polymer composition comprising coated aluminium hydroxide as filler**
Flammenhemmende Polymerzusammensetzung mit beschichtetem Aluminiumhydroxid als Füllmittel
Composition polymère ignifuge comprenant de l'hydroxyde d'aluminium revêtu en tant que charge

(43) Date of publication of application: 24.06.2009
(73) Proprietor: Borealis Technology OY, 06101 Porvoo (FI)
(72) Inventor: Jungqvist, Jonas, 44442 Stenungsund (SE); Sultan, Bernt-Ake, 44442 Stenungsund (SE)
(74) Representative: Kador & Partner

(56) References cited:
- DATABASE WPI Week 199301 Derwent Publications Ltd., London, GB; AN 1993-005668 XP002484610 & JP 04 334811 A (HITACHI CABLE LTD) 20 November 1992 (1992-11-20)
- DATABASE WPI Week 199506 Derwent Publications Ltd., London, GB; AN 1995-041497 XP002484611 & JP 06 322276 A (SUMITOMO ELECTRIC IND CO) 22 November 1994 (1994-11-22)

## Description

The present invention relates to a flame retardant polymer composition, to an article, in particular a wire or cable, comprising said flame retardant polymer composition, and to the use of said composition for the production of a layer of a wire or cable.

For improving the flame retardancy of polymers, several approaches are known in the art. First, it is known to include compounds containing halides into the polymer. However, these materials have the disadvantage that upon burning hazardous and corrosives gases like hydrogen halides are deliberated. This is also a disadvantage of flame retardant polymer composition based on PVC.

In a further approach, flame retardant compositions include relatively large amounts, typically 50 to 60 wt.%, of inorganic fillers such as e.g. hydrated and hydroxy compounds, which during burning decompose endothermically and deliberate inert gases at temperatures in the range of 200 to 600°C. Such inorganic fillers e.g. include Al(OH)₃ and Mg(OH)₂. However, these flame retardant materials suffer from the deterioration of the processability and mechanical properties of the polymer composition due to the high amount of filler.

A third approach as disclosed e.g. in EP 0 393 959 uses a silicon fluid or gum in a composition together with an organic polymer comprising an acrylate or acetate and an inorganic filler which is neither a hydroxide nor a substantially hydrated compound. The flame retardancy of such compositions is based on synergistic effects between these three components which in case of burning lead to the formation of a physically and firmly stable char layer that protects the polymer from further burning. Compounds based on such compositions show good flame retardancy in the limiting oxygen index (LOI) test method according to ISO 4589-A-IV. Sheathed cables and larger conduit (unsheathed) cables also fulfill specific cable tests, like e.g. the single-wire burning test according to IEC 332-1. Cables and wires, however, based on such compositions have difficulties in fulfilling the requirements of bunch tests, e.g. FIPEC test according to prEN 50399:2007. Hence, the flame retardancy of such compositions can still be improved.

It is thus an object of the present invention to provide a flame retardant polymer composition which shows a combination of good flame retardancy i.e. passes the FIPEC test according to prEN 50399:2007, good processability, such as extrudability, and good mechanical properties, such as improved surface quality.

It has surprisingly been found that the object of the present invention can be achieved by using a polymer composition which comprises a polar ethylene copolymer comprising alkyl acrylate comonomer units and coated aluminum hydroxide as inorganic filler.

The invention therefore provides a flame retardant polymer composition comprising:
(A) a polar ethylene copolymer comprising alkyl acrylate comonomer units, and
(B) coated aluminum hydroxide as inorganic filler

The flame retardant polymer composition according to the invention fulfills the requirements of class B2 and C of the FIPEC test according to prEN 50399:2007 and further shows good processability, such as extrudability, and good mechanical properties, such as improved surface quality.

Preferably, the composition is free of halogen- and phosphorous-containing compounds as flame retardancy aids, i.e. such compounds, if at all, are present in the composition in an amount of below 3000 ppm.

More preferably, the composition is entirely free of halogen-containing compounds. However, especially phosphorous containing-compounds may be present in the composition as stabilizers, usually in an amount of below 2000 ppm, more preferably below 1000 ppm.

The aluminum hydroxides as inorganic filler can be coated in several manners know to the person skilled in the art. The coating agent is added in liquid form into the filler in powder form. Most common is to coat the filler and then add the filler to the compound. Another possibility is to add filler and coating agent separately or dry mixed to the compounding unit.

In the composition, components (A); (B) and optionally (C) as described below may either consist of a single chemical compound or a mixture of compounds of the required type.

The numbering of chemical groups, as used herein, is in accordance with the IUPAC system in which the groups of the periodic system of the elements are numbered from 1 to 18.

Furthermore, wherever herein the term "polyolefin" (or "polyethylene") is used both olefin homo- or copolymers (or ethylene homo- or copolymers) are meant.

The inventive a flame retardant polymer composition comprises a polar ethylene copolymer comprising alkyl acrylate comonomer units.

Preferably, the alkyl acrylates are selected from C,- to C₆- alkyl acrylates, more preferably the alkyl acrylates are selected from C,- to C₄- alkyl acrylates and most preferably the alkyl acrylates are methyl acrylate comonomers and most preferably, component (A) is an ethylene methacrylate copolymer.

Preferably, component (A) has an alkyl acrylate content from 10 to 40 wt.%, more preferably from 15 to 35 wt.% and most preferably from 20 to 30 wt.%.

In addition to alkyl acrylate comonomers component (A) may further comprise additional comonomers. These comonomers may be selected from but are not limited to C₃- to C₂₀-alpha-olefins, C,- to C₆- alkyl methacrylates, acrylic acids, methacrylic acids and vinyl acetates. The polar ethylene copolymer may also contain ionomeric structures (like e.g. DuPont's Surlyn type).

In addition to ethylene and the defined comonomers, the copolymers can also contain additional monomers.

Preferably, component (A) is an ethylene copolymer comprising not more than 5 wt. % of comonomers other than alkyl acrylates, more preferably not more than 2.5 wt. % of comonomers other than alkyl acrylates, even more preferably not more than 1.0 wt. % of comonomers other than alkyl acrylates and most preferably not more than 0.5 wt. % of comonomers other than alkyl acrylates.

In the composition of the invention, preferably the amount of component (A) is from 10 to 50 wt.% of the total polymer composition, more preferably is from 15 to 40 wt. % of the total polymer composition and most preferably is from 25 to 35 wt. % of the total polymer composition.

Preferably component (A) has a density of at least 940 g/cm³.

Furthermore, the inventive composition comprises
(B) coated aluminum hydroxide as an inorganic filler.

The aluminum hydroxide has e.g. been coated with an organosilane, a polymer, a carboxylic acid or its salt or mixtures thereof etc. to aid processing and provide better dispersion of the filler in the organic polymer. Such coatings usually do not make up more than 3.0 wt % of the filler.

Preferably, the component (B) contains equal to or less than 3.0 wt % of the coating material, more preferably equal to or less than 2.0 wt % of the coating material and most preferably equal to or less than 1.5 wt % of the coating material.

Preferably the aluminum hydroxide of component (B) is coated with an aminosilane, more preferably a commercially available aminosilane or an aminosilane of one of the following formulas (I) or (II) is used.

AₙSi(NCD)₄₋ₙ (I)

and/or

AₙSi(BNCD)₄₋ₙ (II)

wherein
- N is nitrogen and Si is silicon
- n is 0, 1, 2 or 3
- groups A are identical or different and each group A may be -R¹ or -OR², wherein
   o R¹ is hydrogen or a halogen, e.g. F, Cl, Br, I, preferably F or Cl or a linear or branched C₁- to C₂₀-hydrocarbyl group, preferably a C,- to C₁₀-hydrocarbyl group, more preferably a C,- to C₆-hydrocarbyl group; or
   o R² is hydrogen or a linear or branched C₁- to C₂₀-hydrocarbyl group, preferably a C₁- to C₁₀-hydrocarbyl group, more preferably a C₁- to C₆-hydrocarbyl group;
   o preferably the hydrocarbyl groups within R¹ and R² are aliphatic hydrocarbyl groups, more preferably alkyl groups;
   o each of R¹ and/or R² may optionally been substituted with one or more substituents, each substituent may be independently selected from
      ■ XR³ with
         X being selected from oxygen or sulfur, preferably X is oxygen and
         R³ is
         hydrogen; or
         a linear or branched C,- to C₂₀-hydrocarbyl group, preferably a C,- to C₁₀-hydrocarbyl group, more preferably a C,- to C₆-hydrocarbyl group, preferably the hydrocarbyl groups are aliphatic hydrocarbyl groups, more preferably alkyl groups; or
         a linear or branched polyether with a molecular mass of not more than 1000 g/mol, preferably not more than 800 g/mol, more preferably not more than 600 g/mol, even more preferably not more than 400 g/mol and most preferably not more than 200 g/mol;
- groups B are identical or different and each has a molecular weight of 10 to 300 g/mol, preferably 20 to 200 g/mol or each B may be independently selected from
   o a linear or branched C,- to C₂₀-hydrocarbyl group, preferably a C₁- to C₁₀₋hydrocarbyl group, more preferably a C₆- to C₁₄-hydrocarbyl group, preferably the hydrocarbyl groups are aliphatic hydrocarbyl groups, more preferably alkyl groups or
   o a linear or branched polyether with a molecular mass of not more than 300 g/mol, preferably not more than 200 g/mol, more preferably not more than 100 g/mol, and
- groups C and D are identical or different and each group may be
   o hydrogen; or
   o a linear or branched C,- to C₂₀-hydrocarbyl group, preferably a C₁- to C₁₀-hydrocarbyl group, more preferably a C,- to C₆-hydrocarbyl group, preferably the hydrocarbyl groups are aliphatic hydrocarbyl groups, more preferably alkyl groups; or
   o an aminocarbyl group of the form R⁴R⁵N-(C=O)- or R⁴O-(C=O)-with R⁴ and R⁵ being identical or different and each is hydrogen or a linear or branched C,- to C₂₀₋hydrocarbyl group, preferably a C₁- to C₁₀-hydrocarbyl group, more preferably a C,- to C₆-hydrocarbyl group, preferably the hydrocarbyl groups are aliphatic hydrocarbyl groups, more preferably alkyl groups;
   B, C and/or D may optionally been substituted with one or more substituents, each substituent may be independently selected from
   o halogens, e.g. F, Cl, Br, I, preferably F, Cl
   o alkoxide groups in the form of

      -OR^{2'}
   o silyl groups in the form of

      -(B')₄₋ₘSiA'ₘ

      with m being 1, 2, 3 or 4;or
      o amino groups in the form of

         -(B') (NC'D')
or the substituents may be selected from
-(CH₂)ₒ-Si(-CH₃)ₚ(-O-CH₃)₃₋ₚ
-(CH₂)ₒ-Si(-CH₃)ₚ(-O-CH₂-CH₃)₃₋ₚ
-(CH₂)ₒ-Si(-CH₂-CH₃)ₚ(-O-CH₃)₃₋ₚ
-(CH₂)ₒ-Si(-CH₂-CH₃)ₚ(-O-CH₂-CH₃)₃₋ₚ
wherein
o is 1, 2, 3, 4, 5 or 6, preferably 2, 3, 4 and more preferably 3
p is 0, 1, 2 or 3
and/or
-(CH₂)_{q}-NH₂
-(CH₂)_{q}-NH(-CH₃)
-(CH₂)_{q}-N(-CH₃)₂
-(CH₂)_{q}-NH(-CH₂-CH₃)
-(CH₂)_{q}-N(-CH₂-CH₃)₂
wherein
q is 1, 2, 3, 4, 5 or 6, preferably 2, 3, 4 and more preferably 3
and/or
- (CH₂)₂NH(CH₂)₃Si(OCH₃)₃,
- (CH₂)₂NH(CH₂)₃Si(OC₂H₅)₃,
- (CH₂)₂NH(CH₂)₃Si(CH₃)(OCH₃)₂,
- (CH₂)₂NH(CH₂)₃Si(CH₃)(OC₂H₅)₂,
- (CH₂)₂NH(CH₂)₂NH(CH₂)₃Si(OCH₃)₃,
- (CH₂)₂NH(CH₂)₂NH(CH₂)₃Si(OC₂H₅)₃,
- (CH₂)₂NH(CH₂)₂NH(CH₂)₃Si(CH₃)(OCH₃)₂,
- (CH₂)₂NH(CH₂)₂NH(CH₂)₃Si(CH₃)(OC₂H₅)₂
wherein in the silyl- and amino groups
R^{2'} has the same definition as R² above
A' has the same definition as A above
B' has the same definition as B above
C' has the same definition as C above
D' has the same definition as D above,
this means that B', C' and/or D' may again be substituted with the groups as defined for B, C and D respectively, e.g. -(B')₄₋ₘSiA'ₘ or -(B')₄₋ₘ (NC'D')ₘ. However, preferably B', C' and D' do not carry said further substituents.

The aminosilane may also be a condensate of two or more identical or different aminosilanes of formulas (I) and/or (II) and or a cocondensate of one or more identical or different aminosilanes of formulas (I) and/or (II) with a silane of the following formula (III)

R⁶₄₋ᵣSi(-OR⁷)ᵣ (III)

wherein
o r is 1, 2, 3 or 4
o R⁶ are identical or different and each has a molecular weight of 10 to 300 g/mol, preferably 20 to 200 g/mol or is hydrogen or a linear or branched C₁- to C₂₀-hydrocarbyl group, preferably a C,- to C₁₀-hydrocarbyl group, more preferably a C₁- to C₆-hydrocarbyl group, preferably the hydrocarbyl groups of R⁷ are aliphatic hydrocarbyl groups, more preferably alkyl groups;
   optionally R⁶ is substituted with one or more substituents, each substituent may be independently selected from
   ■ halogens, e.g. F, Cl, Br, I, preferably F and/or Cl
   ■ vinyl groups
   ■ acryloxy groups
   ■ methacryloxy groups
   ■ alkoxy groups
   ■ mercapto groups
o R⁷ is hydrogen or a linear or branched C,- to C₂₀-hydrocarbyl group, preferably a C,- to C₁₀-hydrocarbyl group, more preferably a C₁- to C₆-hydrocarbyl group, preferably the hydrocarbyl groups of R⁷ are aliphatic hydrocarbyl groups, more preferably alkyl groups;
o each R⁷ may optionally been substituted with one or more substituents, each substituent may be independently selected from
   ■ XR⁸ with
      X being selected from oxygen or sulfur, preferably X is oxygen and
      R⁸ is
      hydrogen; or
      a linear or branched C₁- to C₂₀-hydrocarbyl group, preferably a C₁- to C₁₀-hydrocarbyl group, more preferably a C₁- to C₆-hydrocarbyl group, preferably the hydrocarbyl groups are aliphatic hydrocarbyl groups, more preferably alkyl groups; or
      a linear or branched polyether with a molecular mass of not more than 1000 g/mol, preferably not more than 800 g/mol, more preferably not more than 600 g/mol, even more preferably not more than 400 g/mol and most preferably not more than 200 g/mol;

The condensation of silanes is known in the art.

Preferably, the aluminum hydroxide used for component (B) has a surface area measured before coating of 3.0 m²/g or higher, more preferably of 3.5 m²/g or higher, even more preferably of 3.8 m²/g or higher and most preferably of 4.0 m²/g or higher.

Further, preferably the amount of component (B) is from 40 to 70 wt.% of the total polymer composition, more preferably from 50 to 70 wt. % of the total polymer composition, even more preferably from 55 to 65 wt.% of the total polymer composition and most preferably from 57 to 63 wt.% of the total polymer composition.

The flame retardant polymer composition may further comprise
(C) an additional polymer selected from the group of polyolefins, polyesters, polyethers, polyurethanes, elastomeric polymers and silane-crosslinkable polymers or mixtures thereof in a total amount of up to 25 wt.% of the total polymer composition.

Preferably component (C) is present in an amount of 2.0 to 20 wt.% , more preferably component (C) is present in an amount of 3.0 to 18 wt.%, even more preferably component (C) is present in an amount of 5.0 to 15 wt.% and most preferably component (C) is present in an amount of 8.0 to 12 wt.% of the total polymer composition.

The polyolefins comprised in component (C) may be homopolymers or copolymers of ethylene, propylene and butene and polymers of butadiene or isoprene. Suitable homopolymers and copolymers of ethylene include low density polyethylene, linear low, medium or high density polyethylene and very low density polyethylene.

The elastomeric polymers comprised in component (C) maybe ethylene/propylene rubber (EPR), ethylene/propylene-diene monomer rubbers (EPDN), thermoplastic elastomer rubber (TPE) and acrylonitrile butadiene rubber (NBR).

Silane-crosslinkable polymers may also be comprised in component (C), i.e. polymers prepared using unsaturated silane monomers having hydrolysable groups capable of crosslinking by hydrolysis and condensation to form silanol groups in the presence of water and, optionally, a silanol condensation catalyst.

Preferably, component (C) is an ethylene homopolymer, more preferably component (C) is a high density ethylene homopolymer with a density of 944 kg/m³ or more, more preferably 950 kg/m³ or more and most preferably 955 kg/m³ or more.

In addition to the above described components, the inventive compositions may also contain additional conventional additives such as, for example, antioxidants or UV stabilizers in small amounts. Said additives are usually present in an amount of not more than 5.0 wt.%, preferably not more than 3.0 wt.% and more preferably not more than 1.0 wt.%.

The flame retardant polymer composition according to the invention may be prepared by mixing together the components by using any suitable means such as conventional compounding or blending apparatus, e.g. a Banbury Mixer, a 2-roll rubber mill or a twin screw extruder, Buss co-kneader, etc.

Generally, the composition will be prepared by blending the components together at a temperature which is sufficiently high to soften and plasticise the organic polymer, typically at a temperature in the range of 120 to 200 °C.

The flame retardant compositions according to the present invention can be used in many and diverse applications and products. The compositions can for example be molded, extruded or otherwise formed into moldings, sheets and fibers.

As already mentioned, a particularly preferred use of the flame retardant compositions is for the manufacture of wire and cables. The compositions can be extruded about a wire or a cable to form an insulating or jacketing layer or can be used as bedding compounds.

The invention is furthermore directed to a process for making a flame retardant polymer composition comprising:
(A) an ethylene copolymer comprising alkyl acrylate comonomer units,
(B) aluminum hydroxide as filler material
wherein the aluminum hydroxide is coated in the cable extruder with coating agent.

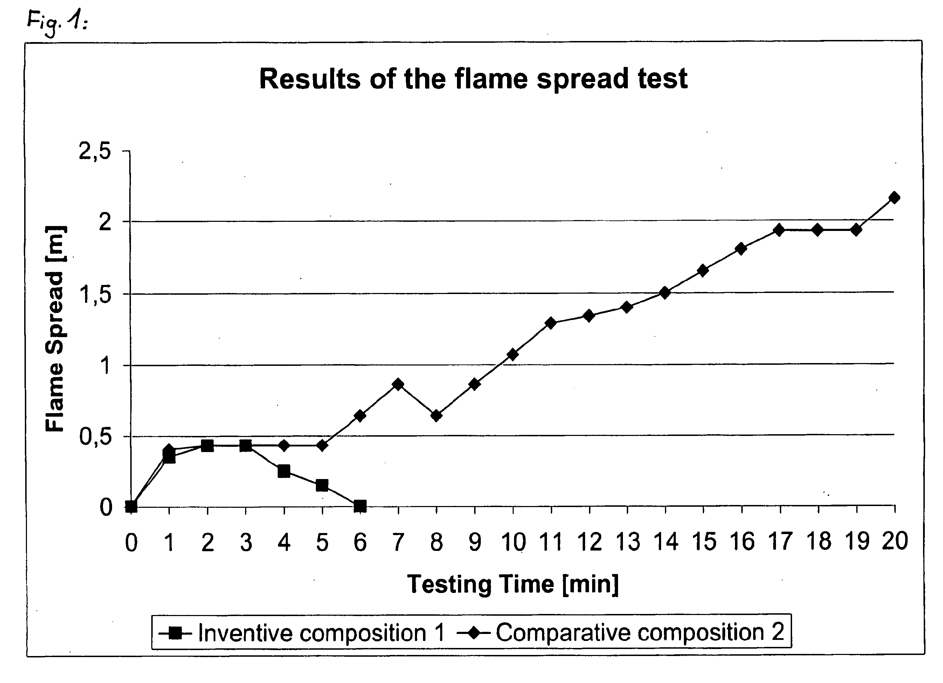

Fig. 1 shows the results of the flame spread test according to prEN 50399:2007 (FIPEC).

In the following the present invention is further illustrated by means of examples.

### Examples

### 1. Measurement Methods

### a) Melt Flow Rate

The melt flow rate MFR₂ was measured in accordance with ISO 1133 at 190°C and a load of 2.16 kg for ethylene homo- and copolymers.

### b) Flame spread test

The flame spread was measured according to prEN 50399:2007 (FIPEC) with the exception that only the flame spread was measured during the test and the air flow was regulated to 5 m³ per minute.

### c) determination of surface area of aluminum hydroxide

The determination of the specific surface area of aluminium hydroxide is done according to ISO 9277.

### d) comonomer content

Comonomer content (wt%) was determined with Fourier transform infrared spectroscopy (FTIR) determination calibrated with ¹³C-NMR. All FTIR methods were run by FTIR a Perkin Elmer 2000, 1 scan, resolution 4 cm⁻¹. The peak for the comonomer was compared to the peak of polyethylene (e.g. the peak for butyl acrylate at 3450 cm⁻¹ was compared to the peak of polyethylene at 2020 cm⁻¹ and the peak for silane at 945 cm⁻¹ was compared to the peak of polyethylene at 2665 cm⁻¹. The calibration with ¹³C-NMR is effected in a conventional manner which is well documented in the literature. Such calibrations are evident for a skilled person. As a reference for calibration, reference is made to Haslam J, Willis HA, Squirrel DC., "Identification and analysis of plastics", 2nd Edition, London, Iliffe Books, 1972. The weight-% was converted to mol-% by calculation.

### 2. Compounding of compositions

Flame retardant polymer compositions according to the invention and for comparative purpose were produced by mixing together the components in a BUSS-co-kneader at a temperature of 150°C. The "Screw" speed was 30 rpm.

### 3. Produced compositions

### Inventive composition 1:

- 29.4 wt.% ethylene methyl acrylate (EMA) copolymer with a methyl acrylate content of 25 wt.%, density of 944 kg/m³, MFR₂ = 0.4 g/10 min
- 10.4 wt.% of HDPE, density 958 kg/m³, MFR₂ = 1.2 g/10 min
- 60 wt.% of aminosilane coated aluminum hydroxide with a surface area of 4 m²/g measured before coating (Martinal OL 104 l distributed by Martinswerk)
- 0.2 wt.% Irganox 1010, distributed by Ciba Speciality Chemicals

### Comparative composition 2:

- 24.4 wt.% ethylene methyl acrylate (EMA) copolymer with a methyl acrylate content of 25 wt.%, density of 944 kg/m³, MFR₂ = 0.4 g/10 min
- 5 wt.% maleic anhydride grafted polyethylene, 0.5 wt.% maleic anhydride, density 934 kg/m³, MFR₂ = 1.3 g/10 min
- 10.4 wt.% of HDPE, density 958 kg/m³, MFR₂ = 1.2 g/10 min
- 60 wt.% of uncoated aluminum hydroxide with a surface area of 4 m²/g (Martinal OL 104 LE distributed by Martinswerk)
- 0.2 wt.% Irganox 1010, distributed by Ciba Speciality Chemicals

### 4. Production of cables

The cables consist of three solid copper conductors with a cross section area of 1.5 mm² covered with an insulation with a thickness of 0.5 mm. The insulated conductors are twisted and covered with bedding. The total diameter of the conductors, insulation and bedding is 6.0 mm. The compositions 1 to 4 as described above are the then put as a jacket on top of the bedding. The finale diameter of the cable is 8.4 mm.

The insulation consists of a composition made of
- 51.8 wt % ethylene butylacrylate (BA) copolymer with BA content of 17 wt.%, MFR₂ = 1.1 g/10min;
- 5 wt % of silicone masterbatch with 40 wt % of polydimethylsiloxane and 60 wt % LDPE;
- 12.5 wt% of polypropylene with MFR₂, 230°C = 1.3 g/10min;
- 30 wt % CaCO₃ coated with stearic acid, having an average particle size (d₅₀-value) of 1.4 microns;
- 0.1 wt % Irganox MD 1024, distributed by Ciba Specialty Chemicals;
- 0.35 wt % Irganox 1010, distributed by Ciba Specialty Chemicals;
- 0.125 wt % Tinuvin 622, distributed by Ciba Specialty Chemicals;
- 0.125 wt % Chimasorb 944, distributed by Ciba Specialty Chemicals.

The used bedding material was FM1239 distributed by Melos GmbH.

The jackets were extruded with wire guide with diameter of 7.9 mm and a die with a diameter of 14.6 mm.

### 5. Results

In a flame spread test according to prEN 50399:2007 the flame spread of inventive composition 1 is not more than 0.43 meters during the test. The flame spread rises to a maximum after 2 minutes, and after 6 minutes the flame spread is zero and not rising again.

Comparative composition 2 shows a constantly rising flame spread with time, the flame spread being more than 2.1 meters after 20 minutes.

Hence, the inventive composition show a lower flame spread than the comparative composition.

The results of the flame spread tests according to prEN 50399:2007 of inventive composition 1 and comparative composition 2 are shown in table 1 below. Further Fig. 1 shows the performance of inventive composition 1 and comparative composition 2 in the flame spread test according to prEN 50399:2007.

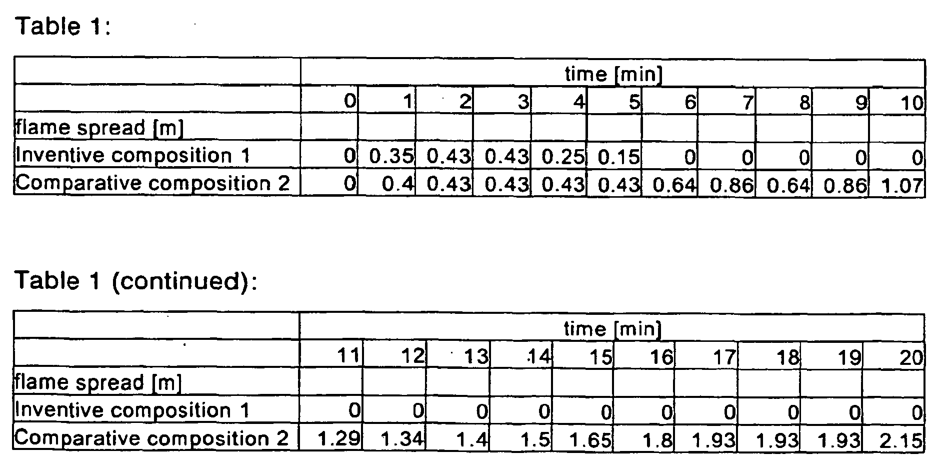

Thus, the bunches of cables comprising the inventive polymer compositions fulfill the requirements of class B2 or C according to the FIPEC test prEN 50399:2007.

## Claims

1. A flame retardant polymer composition comprising:
(A) a polar ethylene copolymer comprising alkyl acrylate comonomer units,
(B) coated aluminum hydroxide as filler material.

2. A flame retardant composition according to claim 1, wherein the alkyl acrylate comonomer units of component (A) are selected from C₁- to C₆- alkyl acrylates.

3. A flame retardant composition according to any of the preceding claims wherein the alkyl acrylate comonomer units of component (A) are methyl acrylate comonomers.

4. A flame retardant composition according to any of the preceding claims wherein component (A) is an ethylene methyl acrylate copolymer.

5. A flame retardant composition according to any of the preceding claims, wherein the amount of component (A) is from 10 to 50 wt.% of the total polymer composition.

6. A flame retardant composition according to any of the preceding claims, wherein component (A) has an comonomer content from 10 to 40 wt.%.

7. A flame retardant composition according to any of the preceding claims, wherein the amount of component (B) is from 40 to 70 wt.% of the total polymer composition.

8. A flame retardant composition according to any of the preceding claims, wherein the aluminum hydroxide has a surface area measured before coating of 3.0 m²/g or more.

9. A flame retardant composition according to any of the preceding claims, wherein the aluminum hydroxide is coated with an aminosilane.

10. A flame retardant composition according any of the preceding claims wherein the composition further comprises:
(C) an additional polymer selected from the group of polyolefins, polyesters, polyethers, polyurethanes, elastomeric polymers and silane-crosslinkable polymers or mixtures thereof in a total amount of up to 25 wt.% of the total polymer composition.

11. A flame retardant composition according to claim 10 wherein component (C) is an ethylene homopolymer.

12. A flame retardant composition according to any of the claims 10 or 11 wherein component (C) is a high density ethylene homopolymer.

13. Articles comprising the flame retardant polymer composition according to any of the preceding claims.

14. Article according to claim 13 wherein the article is a wire or cable comprising a layer made of the flame retardant composition according to any of claims 1 to 12.

15. Use of a flame retardant polymer composition according to any of claims 1 to 12 in the production of a layer of a wire or cable.

16. Process for making a flame retardant polymer composition comprising:
(A) an ethylene copolymer comprising alkyl acrylate comonomer units,
(B) aluminum hydroxide as filler material
wherein the aluminum hydroxide is coated in the cable extruder with coating agent.

## Patentansprüche

1. Flammhemmende Polymerzusammensetzung, umfassend:
(A) ein polares Ethylencopolymer, das Einheiten in Form von Alkylacrylat-Comonomeren umfaßt,
(B) beschichtetes Aluminiumhydroxid als Füllstoff.

2. Flammhemmende Zusammensetzung nach Anspruch 1, wobei die Einheiten in Form von Alkylacrylat-Comonomeren der Komponente (A) aus C₁-C₆-Alkylacrylaten ausgewählt sind.

3. Flammhemmende Zusammensetzung nach einem der vorstehenden Ansprüche, wobei die Einheiten in Form von Alkylarcylat-Comonomeren der Komponente (A) Methylarcylat-Comonomere sind.

4. Flammhemmende Zusammensetzung nach einem der vorstehenden Ansprüche, wobei die Komponente (A) ein Ethylen-Methylacrylat-Copolymer ist.

5. Flammhemmende Zusammensetzung nach einem der vorstehenden Ansprüche, wobei die Menge der Komponente (A) 10 bis 15 Gew.-% der gesamten Polymerzusammensetzung ausmacht.

6. Flammhemmende Zusammensetzung nach einem der vorstehenden Ansprüche, wobei die Komponente (A) einen Comonomergehalt von 10 bis 40 Gew.-% aufweist.

7. Flammhemmende Zusammensetzung nach einem der vorstehenden Ansprüche, wobei die Menge der Komponente (B) 40 bis 70 Gew.-% der gesamten Polymerzusammensetzung ausmacht.

8. Flammhemmende Zusammensetzung nach einem der vorstehenden Ansprüche, wobei das Aluminiumhydroxid eine vor dem Beschichten gemessene Oberfläche von 3,0 m²/g oder mehr aufweist.

9. Flammhemmende Zusammensetzung nach einem der vorstehenden Ansprüche, wobei das Aluminiumhydroxid mit einem Aminosilan beschichtet ist.

10. Flammhemmende Zusammensetzung nach einem der vorstehenden Ansprüche, wobei die Zusammensetzung ferner folgendes aufweist:
(C) ein weiteres Polymer, das aus der Gruppe von Polyolefinen, Polyestern, Polyethern, Polyurethanen, elastomeren Polymeren und mit Silan vernetzbaren Polymeren oder Gemischen davon ausgewählt ist, in einer Gesamtmenge von bis zu 25 Gew.-% der gesamten Polymerzusammensetzung.

11. Flammhemmende Zusammensetzung nach Anspruch 10, wobei die Komponente (C) ein Ethylenhomopolymer ist.

12. Flammhemmende Zusammensetzung nach einem der Ansprüche 10 oder 11, wobei die Komponente (C) ein Ethylenhomopolymer hoher Dichte ist.

13. Gegenstände, die die flammhemmende Polymerzusammensetzung nach einem der vorstehenden Ansprüche umfassen.

14. Gegenstand nach Anspruch 13, wobei der Gegenstand ein Draht oder Kabel ist, der bzw. das eine Schicht aus der flammhemmenden Zusammensetzung nach einem der Ansprüche 1 bis 12 umfaßt.

15. Verwendung einer flammhemmenden Polymerzusammensetzung nach einem der Ansprüche 1 bis 12 bei der Herstellung einer Schicht eines Drahts oder Kabels.

16. Verfahren zum Herstellen einer flammhemmenden Polymerzusammensetzung, umfassend:
(A) ein Ethylencopolymer, das Einheiten in Form von Alkylacrylat-Comonomeren umfaßt,
(B) Aluminiumhydroxid als Füllstoff,
wobei das Aluminiumhydroxid in der Kabelextrusionsvorrichtung mit Beschichtungsmittel überzogen wird.

## Revendications

1. Composition de polymère retardatrice de flamme comprenant :
(A) un copolymère d'éthylène polaire comprenant des unités de comonomères d'acrylate d'alkyle
(B) de l'hydroxyde d'aluminium revêtu en tant que matériau de charge.

2. Composition retardatrice de flamme selon la revendication 1, où les unités de comonomères d'acrylate d'alkyle du composant (A) sont choisies parmi des acrylates d'alkyle de C₁ à C₆

3. Composition retardatrice de flamme selon l'une quelconque des revendications précédentes, où les unités de comonomères d'acrylate d'alkyle du composant (A) sont des comonomères d'acrylate de méthyle.

4. Composition retardatrice de flamme selon l'une quelconque des revendications précédentes, où le composant (A) est un copolymère de méthyl acrylate d'éthylène.

5. Composition retardatrice de flamme selon l'une quelconque des revendications précédentes, où la quantité du composant (A) va de 10 % à 50 % en poids sur la composition de polymère totale.

6. Composition retardatrice de flamme selon l'une quelconque des revendications précédentes, où le composant (A) a une teneur en comonomères de 10 % à 40 % en poids.

7. Composition retardatrice de flamme selon l'une quelconque des revendications précédentes, où la quantité du composant (B) va de 40 % à 70 % en poids sur la composition de polymère totale.

8. Composition retardatrice de flamme selon l'une quelconque des revendications précédentes, où l'hydroxyde d'aluminium possède une surface active mesurée avant revêtement de 3,0 m²/g ou plus.

9. Composition retardatrice de flamme selon l'une quelconque des revendications précédentes, où l'hydroxyde d'aluminium est revêtu par un aminosilane.

10. Composition retardatrice de flamme selon l'une quelconque des revendications précédentes, où la composition comprend en outre :
(C) un polymère supplémentaire choisi parmi le groupe des polyoléfines, polyesters, polyéthers, polyuréthanes, polymères élastomères et polymères réticulables au silane ou des mélanges de ces derniers dans une quantité totale allant jusqu'à 5 % en poids sur la composition de polymère totale.

11. Composition retardatrice de flamme selon la revendication 10, où le composant (C) est un homopolymère d'éthylène.

12. Composition retardatrice de flamme selon l'une quelconque des revendications 10 ou 11, où le composé (C) est un homopolymère d'éthylène à haute densité.

13. Article comprenant la composition de polymère retardatrice de flamme selon l'une quelconque des revendications précédentes.

14. Article selon la revendication 13, lequel article est un fil ou un câble comprenant une couche faite de la composition retardatrice de flamme selon l'une quelconque des revendications 1 à 12.

15. Utilisation d'une composition de polymère retardatrice de flamme selon l'une quelconque des revendications 1 à 12 dans la production d'une couche d'un fil ou d'un câble.

16. Procédé de préparation d'une composition de polymère retardatrice de flamme comprenant :
(A) un copolymère d'éthylène comprenant des unités de comonomères d'acrylate d'alkyle,
(B) de l'hydroxyde d'aluminium en tant que matériau de charge
où l'hydroxyde aluminium est revêtu d'un agent de revêtement dans l'extrudeuse de câble.
